Europäisches Patentamt

European Patent Office

Office européen des brevets

(11) Veröffentlichungsnummer: **0 456 146 A1**

## (12) EUROPÄISCHE PATENTANMELDUNG

(21) Anmeldenummer: 91107285.8

(51) Int. Cl.⁵: **B65G 17/08**, B65G 17/34

(22) Anmeldetag: 06.05.91

(30) Priorität: 11.05.90 DE 4015168

(43) Veröffentlichungstag der Anmeldung:
13.11.91 Patentblatt 91/46

(84) Benannte Vertragsstaaten:
AT BE CH DE DK ES FR GB GR IT LI NL SE

(71) Anmelder: JONGE POERINK B.V.
Prins Bernhardlaan 51
NL-7620 AA Borne(NL)

(72) Erfinder: Jonge Poerink, Nikolaas
Prins Bernhardlaan 25
NL-7622 BD Borne(NL)

(74) Vertreter: Schulze Horn, Stefan, Dipl.-Ing.
M.Sc.
Goldstrasse 36
W-4400 Münster(DE)

(54) Plattenglied für einen Plattenbandförderer.

(57) Die Erfindung betrifft ein Plattenglied für einen Plattenbandförderer mit an gegenüberliegenden Längsseiten desselben in bestimmten gegenseitigen Abständen alternierend angeformten Scharnierteilen, mit axialen Bohrungen, durch die sich, die Plattenglieder miteinander gelenkig verbindende durchgehende Scharnierstäbe hindurcherstrecken.

Das erfindungsgemäße Plattenglied ist so gestaltet, daß die axialen Bohrungen 4 im randseitig äußersten Scharnierteil 3 einen Durchmesser-Rücksprung 6 bilden.

Fig.1

Die Erfindung betrifft ein Plattenglied für einen Plattenbandförderer mit an gegenüberliegenden Längsseiten desselben in bestimmten gegenseitigen Abständen alternierend angeformten Scharnierteilen mit axialen Bohrungen, durch die sich die Plattenglieder miteinander gelenkig verbindende durchgehende Scharnierstäbe hindurcherstrecken.

Derartige Plattenglieder für einen Plattenbandförderer sind aus der DE-OS2 o49 129 bekannt. Bei dieser bekannten Vorrichtung sind entlang der beiderseitigen Längsseiten der einzelnen Plattenglieder alternierend in gegenseitigen Abständen in Längsrichtung verlaufende Scharnierteile angeordnet, in denen axial durchgehende Bohrungen vorgesehen sind, wobei die an der einen Seite des Plattengliedes alternierend in gegenseitigen axialen Abständen angeordneten Scharnierteile mit an der Gegenseite eines benachbarten Plattengliedes alternierend in gleichen gegenseitigen Abständen angeordneten Scharnierteilen in verzahnenden Eingriff kommen, derart, daß Scharnierstäbe in die axial verlaufenden und miteinander fluchtenden Bohrungen benachbarter Plattenglieder einführbar sind, so daß sie ein Scharnier bilden, wobei jeweils benachbarte Plattenglieder miteinander gelenkig verbunden werden.

Bei derartigen Vorrichtungen werden die Scharnierstäbe an den randseitigen äußeren Scharnierteilen mit einer Querbohrung und einem in diese eingreifenden Querstift befestigt oder mit einer axial in das Ende der Bohrung eingedrehten Schraube gesichert.

Bei einer derartigen bekannten Vorrichtung hat es sich als nachteilig erwiesen, daß die Herstellung äußerst kostenaufwendig ist und die Montage viel Zeit erfordert, wobei auch eine eventuell erforderliche Demontage des Plattenbandförderers für das Auswechseln einzelner Plattenglieder kompliziert ist.

Der Erfindung liegt die Aufgabe zugrunde, verbesserte Plattenglieder für einen Plattenbandförderer zu schaffen, bei dem die Befestigung der Scharnierstäbe an den Scharnierteilen der Plattenglieder kostengünstig herstellbar ist, wobei eine Demontage der Plattenglieder des Plattenbandförderers auf einfachste Weise durchführbar ist und die Herstellung der Scharnierteile und der Zuammenbau des Plattenbandförderers aus den Plattengliedern und den Scharnierstäben vereinfacht durchführbar sein soll.

In der Zeichnung ist ein Ausführungsbeispiel des Anmeldungsgegenstandes dargestellt.

Es zeigt:

Fig. 1    ein Plattenglied des Plattenbandförderers in Draufsicht;

Fig. 2    das Plattenglied des Plattenbandförderers gemäß Figur 1 in seitlicher Ansicht;

Fig. 3    das Plattenglied des Plattenbandförderers in Sicht von unten;

Fig. 4    eine stirnseitige Ansicht in Richtung des Pfeiles A gemäß Figur 1;

Fig. 5    eine stirnseitige Ansicht in Richtung des Pfeiles B gemäß Figur 1;

Fig. 6    einen Schnitt nach der Linie VI-VI gemäß Figur 3;

Fig. 7    einen Ausschnitt "C", gemäß Figur 1 in vergrößertem Maßstab, im Längsschnitt.

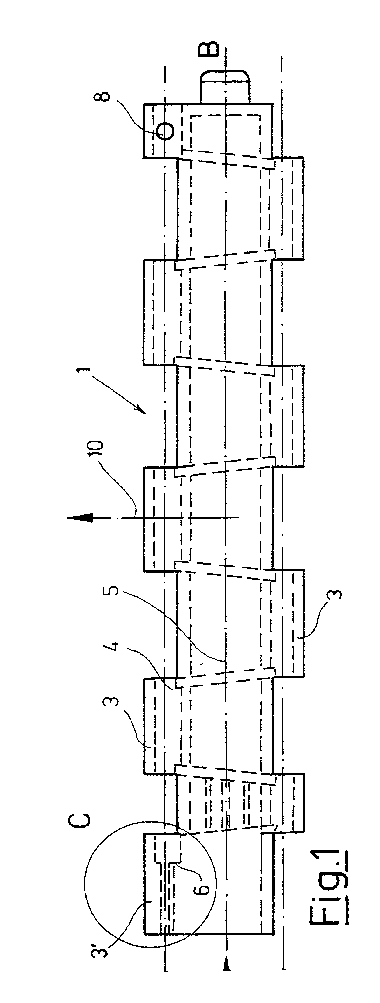

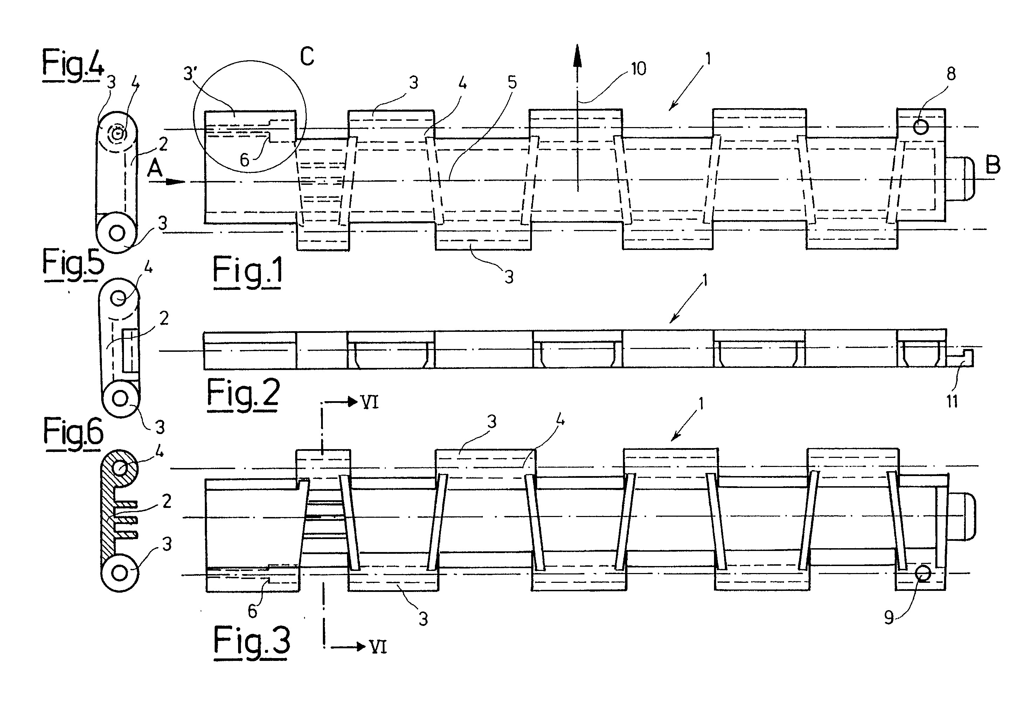

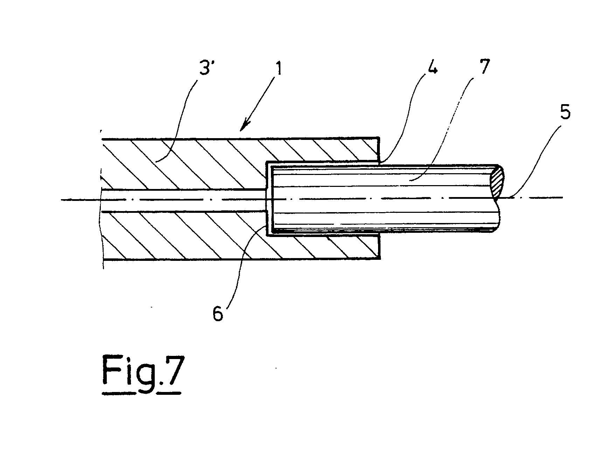

Wie aus Figur 1 bis Figur 7 ersichtlich ist, weisen die einzelnen Plattenglieder 1 des Plattenbandförderers an einander gegenüberliegenden, sich quer zur Laufrichtung 10 erstreckenden Längsseiten eines plattenförmigen Teiles 2 in bestimmten axialen gegenseitigen Abständen alternierend angeordnete Scharnierteile 3 runden Querschnittes auf, welche mit entsprechenden, in alternierenden axialen Abständen angeordneten Scharnierteilen 3 benachbarter Plattenglieder 1 in verzahnenden gegenseitigen Eingriff kommen.

Die Scharnierteile 3 weisen axiale, in Achslängsrichtung des Plattengliedes 1 miteinander fluchtende durchgehende Bohrungen 4 auf, wobei die Bohrungen 4 des einen Scharnierteiles 3 des Plattengliedes mit entsprechenden Bohrungen 4 jeweils benachbarter Plattenglieder 1 miteinander fluchten und in diese axial fluchtenden Bohrungen 4 durchgehende Scharnierstäbe 7 hingeführt werden, so daß eine in Laufrichtung des Plattenbandförderers um die Scharnierstab-Längsachse 5 gelenkige Verbindung aller Plattenglieder 1 erzielt wird.

Die axialen Bohrungen 4 weisen im jeweils randseitig äußersten Scharnierteil 3' einen ihren Durchmesser vermindernden Durchmesserrücksprung 6 auf.

Die Scharnierstäbe 7 sind in Richtung der Scharnierstab-Längsachse 5 um einen gewissen Betrag gekürzt, so daß der mit größerem Durchmesser gestaltete Teil der Scharnierstäbe 7 die entsprechenden axialen Bohrungen in diesem Teil voll ausfüllt und bündig mit der äußeren Kante des Plattengliedes 1 abschließt.

An denjenigen Enden des Plattengliedes 1, an welchen der Durchmesser-Rücksprung 6 angeordnet ist, sind keine besonderen axialen Sicherungsmittel für die axiale Stellung der Scharnierstäbe 7 erforderlich, da die Scharnierstäbe 7 durch den Durchmesser-Rücksprung 6 an einem axialen Auswandern in Richtung nach links gemäß der Zeichnung gehindert werden. Zugleich ist die Möglichkeit geschaffen, mittels eines entsprechenden dünnen Dornes den Scharnierstab 7 nach dem Lösen seiner am rechten Ende gemäß der Zeichnung befindlichen, aus einem in eine Querbohrung 8 eingeführten Querstift 9 bestehenden Axialsicherung auszutreiben.

Am gemäß der Zeichnung rechten Ende der axialen Bohrung 4 wird der Scharnierstab 7 an einem Auswandern in axialer Richtung durch die im Scharnierteil 3 vorgesehene und sich durch das Plattenglied 1 und dem Scharnierstab 7 erstreckende Querbohrung 8 gesichert, in welche der Querstift 9 einführbar ist.

Erfindungsgemäß wird es in einfacher und kostengünstiger Weise ermöglicht, bei Bedarf oder für ein Auswechseln einzelner Teile eine Demontage des Plattenbandförderers durchzuführen.

Bei Bedarf können die Plattenglieder 1 mit benachbarten, quer zum Laufrichtung angrenzenden Plattengliedern mittels Haken 11 verbunden werden.

Die Plattenglieder können sowohl, wie in den Figuren gezeigt, für gerade Förderer als auch für Kurvenförderer ausgebildet sein.

**Patentansprüche**

1. Plattenglied für einen Plattenbandförderer mit an gegenüberliegenden Längsseiten desselben in bestimmten gegenseitigen Abständen alternierend angeformten Scharnierteilen mit axialen Bohrungen, durch die sich die Plattenglieder miteinander gelenkig verbindende durchgehende Scharnierstäbe hindurcherstrecken, dadurch **gekennnzeichnet,** daß die axiale Bohrung (4) einseitig im randseitig äußersten Scharnierteil (3') einen Durchmesser-Rücksprung (6) bildet.

2. Plattenglied nach Anspruch 1, dadurch **gekennzeichnet,** daß das freie Ende der Scharnierstäbe (7) durch einen in eine sich quer durch den jeweiligen randseitigen Scharnierteil (3) und durch den Scharnierstab (7) erstreckende Querbohrung (8) einführbaren Querstift (9) befestigbar ist.

Fig.1

EP 0 456 146 A1

Fig.1

Fig.2

Fig.3

Fig.4

Fig.5

Fig.6

## Fig.7

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-3 036 695 (THUERMAN)<br>* Spalte 1, Zeile 28 - Spalte 2, Zeile 17; Figuren 1-3 *<br>— — — | 1 | B 65 G 17/08<br>B 65 G 17/34 |
| X | US-A-2 911 091 (IMSE)<br>* Spalte 3, Zeilen 22 - 48; Figuren 9, 10 *<br>— — — | 1 | |
| A | DE-B-2 036 465 (J.P.STEVENS & CO.)<br>* Spalte 4, Zeilen 23 - 30; Figur 3 *<br>— — — | 1 | |
| A | DE-B-2 320 921 (DRAADINDUSTRIE JONGE POERINK)<br>* Spalte 3, Zeile 13 - Spalte 4, Zeile 4; Figuren 1, 2 *<br>— — — | 1,2 | |
| D,A | DE-A-2 049 129 (DRAADINDUSTRIE JONGE POERINK)<br>* Anspruch 1 *<br>— — — — — | 1 | |

| | RECHERCHIERTE SACHGEBIETE (Int. Cl.5) |
|---|---|
| | B 65 G |

Der vorliegende Recherchenbericht wurde für alle Patentansprüche erstellt

| Recherchenort | Abschlußdatum der Recherche | Prüfer |
|---|---|---|
| Berlin | 09 August 91 | SIMON J J P |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

                                           

& : Mitglied der gleichen Patentfamilie, übereinstimmendes Dokument